# EUROPEAN PATENT SPECIFICATION

(11) **EP 1 403 577 B1**
(45) Date of publication and mention of the grant of the patent: **09.01.2008**
(21) Application number: 03019928.5
(22) Date of filing: 02.09.2003
(51) Int. Cl.: F16K 31/64, F25B 41/06

(54) **Solenoid valve-equipped expansion valve**
Mit einem Magnetventil versehenes Entspannungsventil
Soupape de détente équipée d'une électrovanne

(30) Priority: 25.09.2002 JP 2002278572
(43) Date of publication of application: 31.03.2004
(73) Proprietor: TGK CO., Ltd., Hachioji-shi, Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(56) References cited:
- US-B1- 6 375 085
- PATENT ABSTRACTS OF JAPAN vol. 1999, no. 01, 29 January 1999 (1999-01-29) & JP 10 274453 A (TGK CO LTD), 13 October 1998 (1998-10-13)
- PATENT ABSTRACTS OF JAPAN vol. 2000, no. 02, 29 February 2000 (2000-02-29) & JP 11 304298 A (TGK CO LTD), 5 November 1999 (1999-11-05)

## Description

This invention relates to a solenoid valve-equipped expansion valve according to the preamble part of claim 1.

The expansion valve is intended for a rear-side circuit of an automotive air-conditioning system which is capable of air-conditioning a front side and a rear side of a vehicle compartment, independently of each other. Conventionally, the refrigeration cycle of such an automotive air-conditioning system, includes in parallel circuits a front evaporator and an expansion valve and a rear evaporator and an expansion valve. A solenoid valve serving as a stop valve is provided in a rear-side circuit. When the rear-side refrigeration cycle is not being used, refrigerant is inhibited from flowing.

In a solenoid valve-equipped expansion valve according to the preamble part of claim 1, as known from JP-A-10 274453, the driving force-transmitting shaft extends outside of the valve hole of the valve seat into the refrigerant passage and into abutment with a valve element retainer. The retainer carries the valve element and is loaded by the second spring in valve closing direction. The second spring is stationarily support in the housing of the expansion valve. A second shaft movably penetrates the retainer and abuts at the valve element from below. The second shaft is fixed to the first movable core of the solenoid. The first movable core is urged by the first spring in valve closing direction. The first spring is provided between the first and second and cores. The second core is a fixed core. As long as the solenoid is de-energised, the valve element is held in the closed state by the first spring irrespective of displacements of the power element which are transmitted by the first shaft to the retainer only, in order to achieve the stop valve function. The retainer then moves in relation to the valve element against the force of the second spring. When the solenoid is energised, the first movable core is attracted to the second fixed core and pulls the second shaft away from the valve element. Movements of the first shaft then are transmitted from the power element to the valve element via the retainer in order to achieve the expansion valve function. The expansion valve consists of many parts. The expansion valve function is negatively influenced by the eccentric and indirect force transmission from the first shaft to the valve element.

In a known solenoid valve-equipped expansion valve (JP-11-182983-A, Fig. 2) the integration of the stop valve and the expansion valve is a mere combination in which the functions of the stop valve and of the expansion valve are independent of each other.

In another known solenoid valve-equipped expansion valve (JP-11-304298, Figs 1-4) the valve element of the stop valve also is used as the valve element of the expansion valve, in order to achieve a compact valve structure. The common or dual-function valve element, however, is pilot-operated, which needs a complicated construction of the valve.

It is an object of the present invention to provide a solenoid valve-equipped expansion valve of simplified construction.

The above problem is solved by the features of claim 1.

When the solenoid is deenergized, axial motion of the common valve element is free with respect to the driving force-transmitting member, and the common valve element is urged by the spring in the valve-closing direction. As a result, the common valve element is seated to place the solenoid valve-equipped expansion valve in a fully-closed state, whereby the expansion valve functions as the stop valve for blocking a refrigerant flow passage. On the other hand, when the solenoid is energized, the common valve element is coupled with the driving force-transmitting member by the solenoid, and hence the valve lift of the common valve element is controlled in a manner interlocked with the power element operating in response to the temperature and pressure of refrigerant, whereby the solenoid valve-equipped expansion valve functions as an ordinary expansion valve.

This allows to achieve a compact solenoid valve-equipped expansion valve in which the common valve element functions as a stop valve when the solenoid is deenergized, and functions as an expansion valve when the solenoid is energized.

In a preferred embodiment, the stop valve completely may seal by means of a valve sheet. In another embodiment, a check valve prevents refrigerant from a compressor, from flowing reversely towards the rear evaporator. The check valve is provided in a refrigerant passage returning from the rear evaporator to the compressor. The check valve completely isolates the rear evaporator from the refrigeration cycle and prevents a decrease of the amount of refrigerant used for refrigerating operations because refrigerant is hindered from collecting and staying in the rear evaporator.

Embodiments of the invention will be described with reference to the drawings.
- Fig. 1: is a diagram of an automotive air-conditioning system comprising a solenoid valve-equipped expansion valve according to the present invention,
- Fig. 2: is a longitudinal section of a first embodiment of the solenoid valve-equipped expansion valve,
- Fig. 3: is a longitudinal cross-section of a second embodiment of the solenoid valve-equipped expansion valve, and
- Fig. 4: is a longitudinal cross-section of a third embodiment of a solenoid valve-equipped expansion valve.

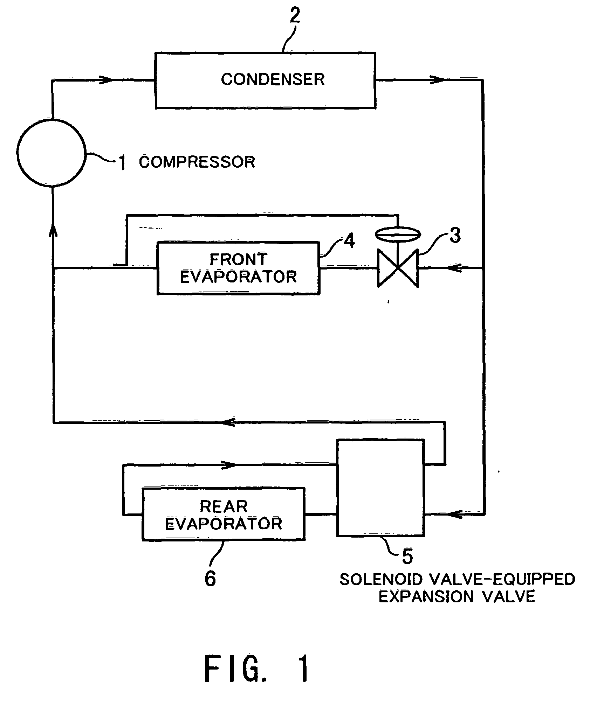

The automotive air-conditioning system shown in Fig. 1 is designed to air-condition a front side and a rear side of a vehicle compartment, independently of each other. A compressor 1, a condenser 2, an expansion valve 3, and a front evaporator 4 form a refrigeration cycle of a front-side air conditioning system, while a solenoid valve-equipped expansion valve 5 and a rear evaporator 6, which are connected in parallel with a circuit of the expansion valve 3 and the front evaporator 4, form part of a refrigeration cycle of a rear-side air conditioning system.

In case of simultaneous operation of both systems, high-temperature and high-pressure refrigerant compressed by the compressor 1 is supplied to the condenser 2, where the refrigerant is caused to exchange heat with air outside the compartment, and condensed to liquid refrigerant. This liquid refrigerant is sent to the expansion valve 3 and the solenoid valve-equipped expansion valve 5. The expansion valve 3 causes the liquid refrigerant to undergo adiabatic expansion to be changed into low-temperature and low-pressure refrigerant in a gas-and-liquid-mixed state, and supplies the refrigerant to the front evaporator 4. The front evaporator 4 causes the refrigerant supplied from the expansion valve 3 to exchange heat with air in the front side of the vehicle compartment or air introduced from outside into the compartment to thereby evaporate the refrigerant. The evaporated gaseous refrigerant is returned to the compressor 1. At this time, the expansion valve 3 detects the temperature of the refrigerant at an outlet of the front evaporator 4, and controls the flow rate of the refrigerant such that a predetermined degree of superheat is maintained.

Similarly, in the solenoid valve-equipped expansion valve 5 as well, the liquid refrigerant condensed by the condenser 2 is caused to undergo adiabatic expansion to be changed into low-temperature and low-pressure refrigerant in a gas-and-liquid-mixed state, and supplied to the rear evaporator 6. The rear evaporator 6 causes the refrigerant supplied from the solenoid valve-equipped expansion valve 5 to exchange heat with air in the rear side of the compartment to thereby evaporate the refrigerant. The evaporated gaseous refrigerant passes through the solenoid valve-equipped expansion valve 5 and returns to the compressor 1. At this time, the solenoid valve-equipped expansion valve 5 controls the flow rate of the refrigerant by detecting the temperature and pressure of the refrigerant delivered from the rear evaporator 6.

When the rear-side air conditioning system is not used, the solenoid valve-equipped expansion valve 5 blocks a refrigerant passage in the rear-side air conditioning system so as to inhibit refrigerant from flowing in the rear-side circuit.

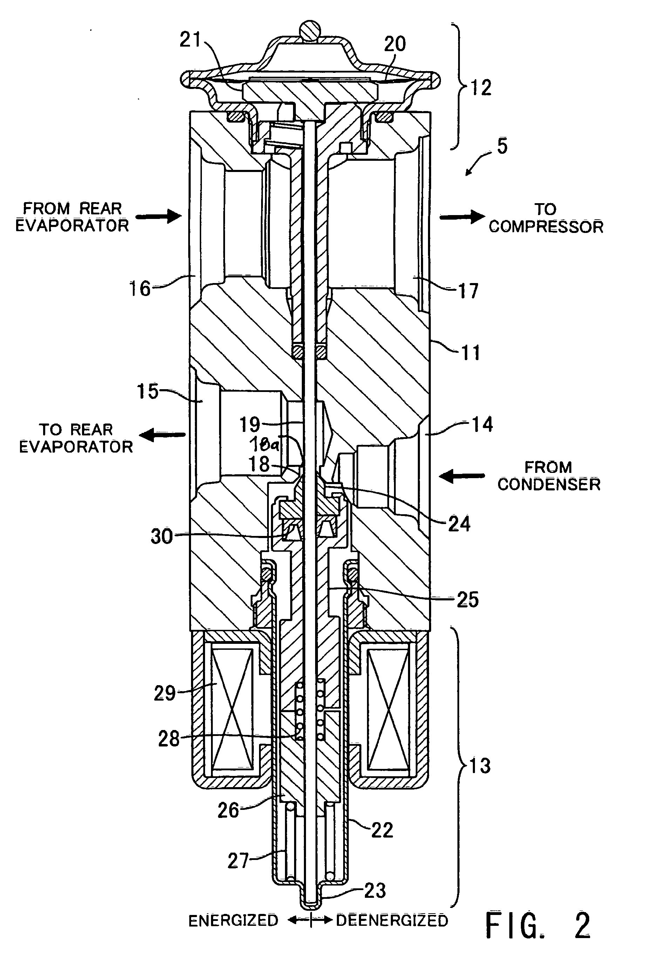

The solenoid valve-equipped expansion valve 5 according to a first embodiment is shown in Fig. 2 to simultaneously show a stop valve function (right half of Fig. 2) for blocking a refrigerant flow passage, and an ordinary expansion valve function (left-half of Fig. 2) where the valve lift is controlled.

A body block 11 accommodates the stop valve and a valve portion of the expansion valve, a power element 12 for sensing the temperature and pressure of refrigerant returned from the rear evaporator 6, and a solenoid 13 for switching the solenoid valve-equipped expansion valve 5 between the function of the stop valve and that of the expansion valve.

The body block 11 has side portions formed with a port 14 for receiving high-temperature and high-pressure refrigerant from the condenser 2, a port 15 for supplying low-temperature and low-pressure refrigerant adiabatically expanded by the solenoid valve-equipped expansion valve 5, to the rear evaporator 6, a port 16 for receiving refrigerant returned from the rear evaporator 6, and a port 17 for delivering the refrigerant received by the port 16 to the compressor 1.

A fluid passage between the ports 14, 15 contains a valve seat 18 integrally formed with the body block 11. A shaft 19 extends longitudinally through a valve hole of the valve seat 18. An upper shaft end abuts a center disk 21 disposed on an underside surface of a diaphragm 20 of the power element 12. A lower shaft end is supported by a bearing portion 23 formed in a core casing 22 of the solenoid 13.

On an upstream side of the valve seat 18, a common valve element 24 is disposed in a manner opposed to the valve seat 18 such that the common valve element 24 can move to and away from the valve seat 18, using the shaft 19 as a guide, whereby a gap between the valve seat 18 and the common valve element 24 forms a variable orifice for throttling the flow of the high-pressure refrigerant. The high-pressure refrigerant is adiabatically expanded when it flows through the variable orifice.

The common valve element 24 is held by a first core 25 of the solenoid 13, which is axially movable using the shaft 19 as a guide. The first core 25 operates as a movable core for actuating the common valve element 24. Below the first core 25 is disposed a second core 26 rigidly fitted on the shaft 19 for operating as a fixed core. The second core 26 is urged upward by a spring 27. The shaft 19 is urged by the spring 27 such that it is always in abutment with the power element. Further, a spring 28 is disposed between the first core 25 and the second core 26.

When the solenoid is deenergized, the spring 28 urges the first core 25 away from the second core 26, whereby the common valve element 24 held by the first core 25 is always seated on the valve seat 18 to maintain a fully-closed state. A solenoid coil 29 is disposed outside the core casing 22. When the solenoid coil 29 is energized, the first core 25 and the second core 26 are attracted to each other, whereby the common valve element 24 and the shaft 19 are electromagnetically coupled with each other to thereby transmit the displacement of the diaphragm 20 of the power element 12 to the common valve element 24.

In order to prevent internal leakage toward the downstream side of the valve portion through a gap between the common valve element 24 and the shaft 19 (when the valve 5 is closed) a V-shaped packing 30 is disposed in a space formed between the common valve element 24 and the first core 25.

When the rear-side air conditioning system is not used, the solenoid 13 is in a deenergized state. The first core 25 is urged by the spring 28 away from the second core 2. The common valve element 24 is seated by the first core 25 on the valve seat 18. This is the stop valve function for blocking the refrigerant flow passage and for preventing refrigerant from flowing into the rear-side circuit.

When the rear-side air conditioning system is used, the solenoid 13 is energized. The first core 25 and the second core 26 are attracted and attached to each other, so that the common valve element 24 is indirectly fixed to the shaft 19. Since the first core 25 is moved toward the second core 26, the common valve element 24 is moved away from the valve seat 18 to cause high-temperature and high-pressure refrigerant supplied from the condenser 2 to the port 14 to flow into the port 15 through the gap between the common valve element 24 and the valve seat 18. The high-temperature and high-pressure refrigerant is adiabatically expanded into low-temperature and low-pressure refrigerant, which is supplied from the port 15 to the rear evaporator 6.

The rear evaporator 6 causes the refrigerant to exchange heat with air in the rear side of the compartment to thereby evaporate the refrigerant. The evaporated refrigerant is returned to the port 16 of the solenoid valve-equipped expansion valve 5 and is further returned to the compressor 1 from the port 17. The temperature and pressure of the refrigerant delivered from the rear evaporator 6 are sensed by the diaphragm 20 of the power element 12. The displacement of the diaphragm 20 dependent on the temperature and pressure of the refrigerant is transmitted to the common valve element 24 via the shaft 19 and the first and second cores 25, 26, to thereby control the flow rate of the refrigerant.

Alternatively, the driving force-transmitting member for transmitting the driving force of the power element 12 to the valve portion, i.e. the shaft 19, may be divided to define two or more shafts, instead.

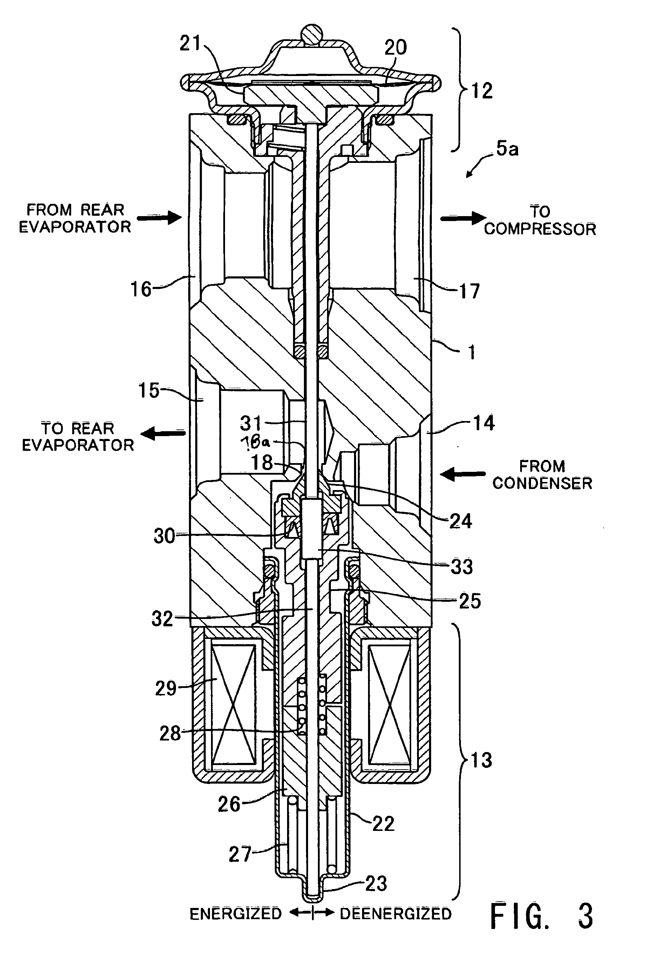

The solenoid valve-equipped expansion valve 5a of Fig. 3 (second embodiment), when used as an expansion valve (left half of Fig. 3), has a predetermined electric current supplied to the solenoid 13, for pulling the common valve element 24 away from the valve seat 18. During this operation, movements of the common valve element 24 are not adversely affected by the pressure of refrigerant supplied to the port 14.

The driving force-transmitting member for transmitting the driving force of the power element 12 to a valve portion here is formed by two shafts 31, 32, and a valve element guide 33. The shaft 31, the valve element guide 33, and the shaft 32 are arranged on the same axis in the mentioned order. The upper end of the shaft 31 abuts at the center disk 21 of the power element 12. The lower end of the shaft 31 is configured to axially movably guide the common valve element 24. The valve element guide 33 has essentially the same diameter as the valve hole and axially movably guides the common valve element 24. The shaft 32 is urged by the spring 27 toward the power element 12. Further, the V-shaped packing 30 is disposed in a space formed between the common valve element 24 and a first core 25 such that the V-shaped packing 30 sealingly encloses the guide 33 and sealingly is confined in the space, whereby internal leakage of refrigerant is prevented when the valve 5a is closed. Such leakage, otherwise, would occur when high-pressure refrigerant introduced into the valve element guide 33 via a gap between the first core 25 and the shaft 32 flows toward a downstream side of the valve portion through a gap between the common valve element 24 and the valve element guide 33, and a gap between the common valve element 24 and a shaft 31.

Since the valve element guide 33 has the same diameter as the hole, the effective pressure-receiving area of the seating portion where the common valve element 24 is seated on the valve seat 18, and the effective pressure-receiving area of the portion of the common valve element 24 which slides in gastight condition along the valve element guide 33 are equal. The pressure of high-pressure refrigerant introduced from the port 14 then does not generate any forces urging the common valve element 24 in opening and closing directions. Therefore, when the solenoid 13 is energized to attract the first core 25 and the second core 26 to each other, it is possible to pull the common valve element 24 away from the valve seat 18 only by the solenoid force. This means that only a small solenoid force is required for fixedly attaching the common valve element 24 to the driving force-transmitting member, and hence the solenoid 13 can be made compact in size.

Alternatively, the shafts 31, 32 and the valve element guide 33 may be integrally formed as a unitary member. Further, the shaft 32 in the solenoid 13 may have the same diameter as the valve element guide 33 to thereby integrally form the shaft 32 and the valve element guide 33 as a unitary member.

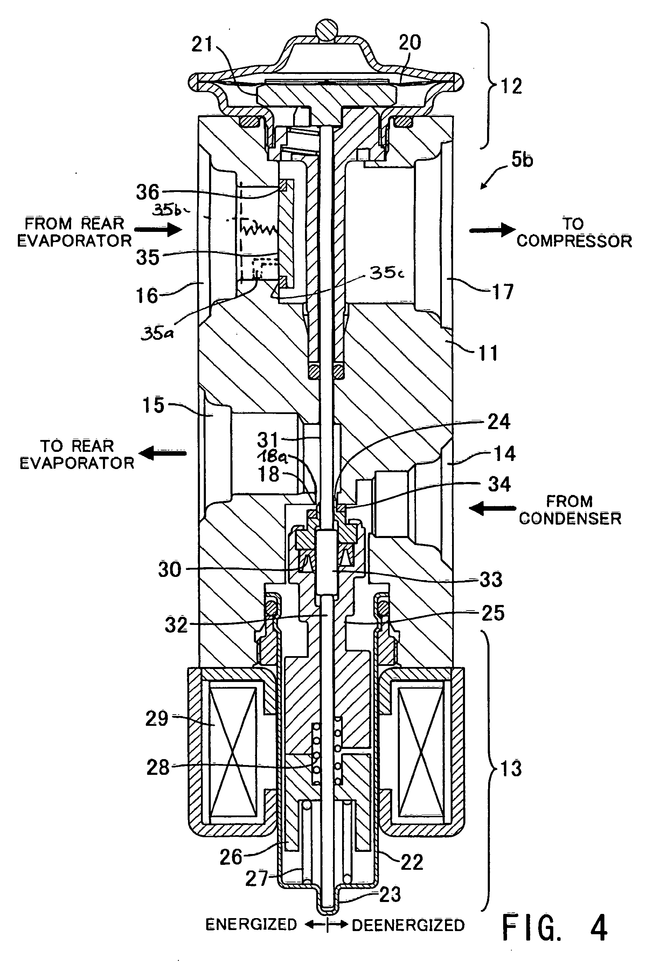

The solenoid valve-equipped expansion valve 5b of Fig. 4 (third embodiment) is configured such that here the function of completely stopping a flow of refrigerant and the function of preventing a reverse flow of refrigerant from the compressor 1 into the rear evaporator 6 are added to the function of the stop valve of the solenoid valve-equipped expansion valve 5a of Fig. 3.

The common valve element 24 in Fig 4 has a flexible annular valve sheet 34 at a seat portion which co-operates with the valve seat 18. When seated the valve sheet 34 completely seals the valve seat 18 when the solenoid valve-equipped expansion valve 5b is fully closed, whereby any flow of refrigerant is completely suppressed by the function of the stop valve for placing the solenoid valve-equipped expansion valve 5b in a fully closed state when the solenoid 13 is deenergized.

Further, a check valve 35 is disposed in a refrigerant passage between a port 16 for receiving refrigerant from the rear evaporator 6, and a port 17 for returning the refrigerant to the compressor 1. The check valve 35 is disposed on an outlet side of the refrigerant passage where the refrigerant enters a space communicating with a chamber under the diaphragm 20. The check valve 35 is integrally formed with at least one leg portion 35a guided by an inner wall of the refrigerant passage in directions of opening and closing of the check valve 35, and at the same time is urged by a spring 35b having a small spring force in the valve-closing direction. The check valve 35 carries a flexible annular valve sheet 36 at a seating portion where it is seated on a valve seat 35c. When the solenoid 13 is deenergized, and the common valve element 24 is seated on the valve seat 18 to completely isolate the rear evaporator 6 from the condenser 2, the check valve 35 completely isolates the rear evaporator 6 from the compressor 1. Therefore, when the rear-side circuit is made inoperative for a long time period, it is possible to prevent refrigerant on the compressor side from flowing reversely into the rear evaporator 6 and to stay therein. This prevents that the amount of refrigerant of the front-side circuit is decreased, and assures permanently normal refrigerating operation of the front-side circuit.

Alternatively, the valve sheet 34 may be provided on the valve seat 18, instead. Further, the solenoid valve-equipped expansion valves 5, 5a, 5b may be applied to refrigeration cycles using every kind of refrigerant. Furthermore, it is possible to apply the same expansion valve on the front-side circuit of an air conditioning system arranged in a reverse manner to the Fig. 1 arrangement. Further, it is possible to apply the expansion valve according to the invention in both of the systems.

## Claims

1. A solenoid valve-equipped expansion valve (5, 5a, 5b) in which an expansion valve for adiabatically expanding refrigerant and a stop valve for opening and closing a refrigerant passage are integrated with each other, the expansion valve comprising
a common valve element (24) commonly used by the expansion valve and the stop valve, the common valve element (24) being axially movably disposed on a side of a valve hole (18a) of a valve seat (18) opposite to the power element (12),
a first spring (28) provided between first and second cores (25, 26) of the solenoid for urging the common valve element (24) in valve-closing direction via a first movable core (25) of a solenoid (13) to hold the common valve element (24) in a closed state when the solenoid (13) is de-energised,
a driving force-transmitting shaft (19, 31, 32) extending from a power element (12) of the expansion valve at least into the refrigerant passage, the driving force-transmitting shaft being urged by a second spring (26, 27) into permanent abutment with the power element (12),
the solenoid (13) serving for electromagnetically coupling the first movable core (25) and a second core (26) against the urging force of the first spring (28) when the solenoid is energised to thereby transmit displacements of the power element (12) via the driving force-transmitting shaft to the common valve element (24),
**characterised in that**
the driving force-transmitting shaft (9, 31, 32) penetrates the valve hole (18a) of the valve seat (18), slidably penetrates the common valve element (24), such that the common valve element (24) is axially guided by the driving force-transmitting shaft, further penetrates the first movable core (25), and extends into the second, axially movably arranged core (26) of the solenoid (13), a portion of the driving force-transmitting shaft being rigidly fixed to the second movable core (26),
that the common valve element (24) is held by the first movable core (25) such that the first movable core (25) is movable along the driving force-transmitting shaft and actuates the common valve element (24) via the spring (28) into the closed state with respect to the driving force-transmitting shaft when the solenoid (13) is de-energised,
that the second movable core (26) is urged by the second spring (27) against the force of the first spring (28),
and that the first and second cores (25, 26) when coupled by the energised solenoid (13) in turn couple the driving force-transmitting shaft and the common valve element (24) in order to then transmit displacements of the power element (12) directly to the common valve element (24).

2. The solenoid valve-equipped expansion valve according to claim 1, **characterised in that** the driving force-transmitting shaft comprises a single shaft (19), and that a seal member (30) is provided between the shaft (19) and the common valve element (24), preferably a V-shaped packing inserted into the first movable core (25).

3. The solenoid valve-equipped expansion valve according to claim 1, **characterised in that** the driving force-transmitting shaft is defined by arranging along the same axis a first shaft (31) having one end in abutment with the power element (12) and another end guiding the common valve element (24), a second shaft (32) urged towards the first shaft (31), and a shaft-like valve element guide (33) slidably disposed between the first and second shafts (31, 32) in the first movable core (25) such that the valve element guide (33) axially movably guides the common valve element (24), the valve element guide (33) having the same diameter as the valve hole (18a), and that a seal member (30) is disposed between the valve element guide (33) and the common valve element (24).

4. The solenoid valve-equipped expansion valve according to claim 1, **characterised in that** the driving force-transmitting shaft is defined by arranging along the same axis a first shaft (31) having one end in abutment with the power element (12) and another end guiding the slidably engaging into the common valve element (24), and a second shaft (32, 33) having the same diameter as the valve hole (18a) and being fixedly connected to the second movable core (26), that the second shaft (32, 33) is urged toward the first shaft (31) and axially movably guides the common valve element (24) and the first movable core (25), and that a seal member (30) is disposed between the second shaft (32, 33) and the common valve element (24).

5. The solenoid valve-equipped expansion valve according to claim 1, **characterised in that** a flexible valve sheet (34) either is provided on the common valve element (24) or on the valve seat (18) on which the common valve (24) is to be seated, for completely stopping a flow of the refrigerant through the valve hole (18a).

6. The solenoid valve-equipped expansion valve according to claim 1, **characterised in that** a check valve (36) is provided in a second refrigerant passage (16, 17) of the expansion valve for preventing a reverse flow of refrigerant and for allowing refrigerant to pass therethrough so as to cause the power element (12) to sense temperature and pressure of the refrigerant.

## Patentansprüche

1. Mit einem Magnetventil ausgestattetes Expansionsventil (5, 5a, 5b), in welchem miteinander ein Expansionsventil zum adiabatischen Expandieren von Kältemittel und ein Stoppventil zum Öffnen und Verschließen einer Kältemittelpassage integriert sind, wobei das Expansionsventil aufweist:
ein gemeinsames Ventilelement (24), das sowohl durch das Expansionsventil als auch durch das Stoppventil benutzt wird und an einer Seite einer Ventilöffnung (18a) eines Ventilsitzes (18) abgewandt von einem Antriebselement (12) axial beweglich angeordnet ist,
eine zwischen ersten und zweiten Kernen (25, 26) des Magneten angeordnete erste Feder (28), die das gemeinsame Ventilelement (24) über einen ersten beweglichen Kern (25) eines Magneten (13) in Ventilschließrichtung beaufschlagt, um das gemeinsame Ventilelement (24) bei stromlosem Magneten (13) in einem geschlossenen Zustand zu halten,
eine eine Antriebskraft übertragende Welle (19, 31, 32), die sich von dem Antriebselement (12) des Expansionsventils zumindest in die Kältemittelpassage erstreckt und durch eine zweite Feder (26, 27) in permanente Anlage an dem Antriebselement (12) beaufschlagt ist,
wobei der Magnet (13) dazu dient, den ersten beweglichen Kern (25) und den zweiten beweglichen Kern (26) gegen die Beaufschlagungskraft der ersten Feder (28) elektromagnetisch miteinander zu koppeln, sobald der Magnet bestromt ist, um **dadurch** Versetzbewegungen des Antriebselementes (12) über die die Antriebskraft übertragende Welle auf das gemeinsame Ventilelement (24) zu übertragen,
**dadurch gekennzeichnet, dass**
die die Antriebskraft übertragende Welle (9, 31, 32) die Ventilöffnung (18a) des Ventilsitzes (18) und auch das gemeinsame Ventilelement (24) gleitend derart durchdringt, dass das gemeinsame Ventilelement (24) durch die die Antriebskraft übertragende Welle axial geführt ist, dass die Welle den ersten beweglichen Kern (25) durchdringt und sich in den zweiten, axial beweglich angeordneten Kern (26) des Magneten (13) erstreckt, wobei ein Abschnitt der die Antriebskraft übertragenden Welle an dem zweiten beweglichen Kern starr fixiert ist und das gemeinsame Ventilelement (24) durch den ersten beweglichen Kern (25) derart gehalten wird, dass der erste bewegliche Kern (25) entlang der die Antriebskraft übertragenden Welle beweglich ist und das gemeinsame Ventilelement (24) über die Feder (28) in den geschlossenen Zustand und in Bezug zu der die Antriebskraft übertragenden Welle betätigt, wenn der Magnet (13) stromlos ist,
der zweite bewegliche Kern (26) durch die zweite Feder (26) gegen die Kraft der ersten Feder (28) beaufschlagt ist,
und die ersten und zweiten Kerne (25, 26), wenn durch den bestromten Magneten (13) miteinander gekoppelt, ihrerseits die die Antriebskraft übertragende Welle und das gemeinsame Ventilelement (24) miteinander koppeln, um dann Versetzbewegungen des Antriebselementes (12) direkt auf das gemeinsame Ventilelement (24) zu übertragen.

2. Mit einem Magnetventil ausgestattetes Expansionsventil gemäß Anspruch 1, **dadurch gekennzeichnet, dass** die die Antriebskraft übertragende Welle eine einzelne Welle (19) ist, und dass zwischen der Welle (19) und dem gemeinsamen Ventilelement (24) ein Dichtungsglied (30) vorgesehen ist, vorzugsweise eine V-förmige Packung, die in den ersten beweglichen Kern (25) eingesetzt ist.

3. Mit einem Magnetventil ausgestattetes Expansionsventil gemäß Anspruch 1, **dadurch gekennzeichnet, dass** die die Antriebskraft übertragende Welle definiert wird durch Anordnen entlang derselben Achse einer ersten Welle (31), deren eines Ende in Anlage ist an dem Antriebselement (12), und deren anderes Ende das gemeinsame Ventilelement (24) führt, einer zweiten Welle (32), die zu der ersten Welle (31) hin beaufschlagt ist, und einer wellenähnlichen Ventilelementführung (33), die gleitend zwischen den ersten und zweiten Wellen (31, 32) derart in dem ersten beweglichen Kern (25) angeordnet ist, dass die Ventilelementführung (33) das gemeinsame Ventilelement (24) axial beweglich führt, wobei die Ventilelementführung (33) denselben Durchmesser hat wie die Ventilöffnung (18a), und dass zwischen der Ventilelementführung (33) und dem gemeinsamen Ventilelement (24) ein Dichtungsglied (30) angeordnet ist.

4. Mit einem Magnetventil ausgestattetes Expansionsventil gemäß Anspruch 1, **dadurch gekennzeichnet, dass** die die Antriebskraft übertragende Welle definiert wird durch Anordnen entlang derselben Achse einer ersten Welle (31), die ein Ende in Anlage mit dem Antriebselement (12) und ein anderes Ende aufweist, das in das gemeinsame Ventilelement (24) gleitend eingreift und dieses führt, und einer zweiten Welle (32, 33), die denselben Durchmesser hat wie die Ventilöffnung (18a) und mit dem zweiten beweglichen Kern (26) fest verbunden ist, dass die zweite Welle (32, 33) zu der ersten Welle (31) hin beaufschlagt ist und das gemeinsame Ventilelement (24) und den ersten beweglichen Kern (25) axial beweglich führt, und dass zwischen der zweiten Welle (32, 33) und dem gemeinsamen Ventilelement (24) ein Dichtungsglied (30) angeordnet ist.

5. Mit einem Magnetventil ausgestattetes Expansionsventil gemäß Anspruch 1, **dadurch gekennzeichnet, dass** entweder an dem gemeinsamen Ventilelement (24) oder an dem Ventilsitz (18) eine flexible Ventilauflage (34) vorgesehen ist, auf welcher das gemeinsame Ventilelement (24) aufzusetzen ist, um eine Strömung des Kältemittels durch die Ventilöffnung (18a) vollständig zu unterbinden.

6. Mit einem Magnetventil ausgestattetes Expansionsventil gemäß Anspruch 1, **dadurch gekennzeichnet, dass** zum Verhindern einer umgekehrten Kältemittelströmung in einer zweiten Kältemittelpassage (16, 17) des Expansionsventils ein Rückschlagventil (36) angeordnet ist, welches auch einen Durchgang von Kältemittel gestattet, um zu bewirken, dass das Antriebselement (12) die Temperatur und den Druck des Kältemittels abzutasten vermag.

## Revendications

1. Soupape de détente (5, 5a, 5b) équipée d'une électrovanne dans laquelle une soupape de détente pour détendre adiabatiquement un fluide frigorigène et une soupape d'arrêt pour ouvrir et fermer un passage de fluide frigorigène sont intégrées l'une avec l'autre, la soupape de détente comprenant :
un élément de soupape commun (24) utilisé en commun par la soupape de détente et la soupape d'arrêt, l'élément de soupape commun (24) étant disposé de manière mobile axialement d'un côté d'un trou de soupape (18a) d'un siège de soupape (18) opposé à l'élément de puissance (12),
un premier ressort (28) prévu entre des premier et deuxième noyaux (25, 26) de l'électrovanne pour pousser l'élément de soupape commun (24) dans une direction de fermeture de soupape via un premier noyau mobile (25) d'une électrovanne (13) pour maintenir l'élément de soupape commun (24) dans un état fermé lorsque l'électrovanne (13) n'est pas alimentée,
un arbre de transmission de force d'entraînement (19, 31, 32) s'étendant d'un élément de puissance (12) de la soupape de détente au moins dans le passage de fluide frigorigène, l'arbre de transmission de force d'entraînement étant poussé par un deuxième ressort (26, 27) en butée permanente contre l'élément de puissance (12),
l'électrovanne (13) servant à accoupler électromagnétiquement le premier noyau mobile (25) et un deuxième noyau (26) contre la force de poussée du premier ressort (28) lorsque l'électrovanne est alimentée pour, de ce fait, transmettre les déplacements de l'élément de puissance (12) via l'arbre de transmission de force d'entraînement à l'élément de soupape commun (24),
**caractérisée en ce que**
l'arbre de transmission de force d'entraînement (9, 31, 32) pénètre dans le trou de soupape (18a) du siège de soupape (18), pénètre de manière coulissante dans l'élément de soupape commun (24), de sorte que l'élément de soupape commun (24) soit guidé axialement par l'arbre de transmission de force d'entraînement, pénètre en outre dans le premier noyau mobile (25), et s'étend dans le deuxième noyau (26) agencé de manière mobile axialement de l'électrovanne (13), une partie de l'arbre de transmission de force d'entraînement étant fixée rigidement au deuxième noyau mobile (26),
**en ce que** l'élément de soupape commun (24) est maintenu par le premier noyau mobile (25) de sorte que le premier noyau mobile (25) est mobile le long de l'arbre de transmission de force d'entraînement et actionne l'élément de soupape commun (24) via le ressort (28) dans l'état fermé par rapport à l'arbre de transmission de force d'entraînement lorsque l'électrovanne (13) n'est pas alimentée,
**en ce que** le deuxième noyau mobile (26) est poussé par le deuxième ressort (27) contre la force du premier ressort (28),
et **en ce que** les premier et deuxième noyaux (25, 26), lorsqu'ils sont accouplés par l'électrovanne (13) alimentée, accouplent à leur tour l'arbre de transmission de force d'entraînement et l'élément de soupape commun (24) afin de transmettre ensuite les déplacements de l'élément de puissance (12) directement à l'élément de soupape commun (24).

2. Soupape de détente équipée d'une électrovanne selon la revendication 1, **caractérisée en ce que** l'arbre de transmission de force d'entraînement comprend un arbre (19) unique, et **en ce qu'**un élément d'étanchéité (30) est prévu entre l'arbre (19) et l'élément de soupape commun (24), de préférence une garniture en V insérée dans le premier noyau mobile (25).

3. Soupape de détente équipée d'une électrovanne selon la revendication 1, **caractérisée en ce que** l'arbre de transmission de force d'entraînement est défini en agençant le long du même axe un premier arbre (31) ayant une extrémité en butée contre l'élément de puissance (12) et une autre extrémité guidant l'élément de soupape commun (24), un deuxième arbre (32) poussé vers le premier arbre (31), et un guide d'élément de soupape en forme d'arbre (33) disposé de manière coulissante entre les premier et deuxième arbres (31, 32) dans le premier noyau mobile (25) de sorte que le guide d'élément de soupape (33) guide de manière coulissante axialement l'élément de soupape commun (24), le guide d'élément de soupape (33) ayant le même diamètre que le trou de soupape (18a), et **en ce qu'**un élément d'étanchéité (30) est disposé entre le guide d'élément de soupape (33) et l'élément de soupape commun (24).

4. Soupape de détente équipée d'une électrovanne selon la revendication 1, **caractérisée en ce que** l'arbre de transmission de force d'entraînement est défini en agençant le long du même axe un premier arbre (31) ayant une extrémité en butée contre l'élément de puissance (12) et une autre extrémité guidant et s'engageant de manière coulissante dans l'élément de soupape commun (24), et un deuxième arbre (32, 33) ayant le même diamètre que le trou de soupape (18a) et relié fixement au deuxième noyau mobile (26), **en ce que** le deuxième arbre (32, 33) est poussé vers le premier arbre (31) et guide de manière mobile axialement l'élément de soupape commun (24) et le premier noyau mobile (25), et **en ce qu'**un élément d'étanchéité (30) est disposé entre le deuxième arbre (32, 33) et l'élément de soupape commun (24).

5. Soupape de détente équipée d'une électrovanne selon la revendication 1, **caractérisée en ce qu'**une membrane de soupape (34) flexible est prévue soit sur l'élément de soupape commun (24), soit sur le siège de soupape (18) sur lequel l'élément de soupape commun (24) doit venir en appui, pour arrêter complètement un écoulement du fluide frigorigène à travers le trou de soupape (18a).

6. Soupape de détente équipée d'une électrovanne selon la revendication 1, **caractérisée en ce qu'**un clapet de non-retour (36) est prévu dans un deuxième passage de fluide frigorigène (16, 17) de la soupape de détente pour empêcher un écoulement inverse du fluide frigorigène et pour permettre au fluide frigorigène de passer à travers celui-ci de manière à amener l'élément de puissance (12) à détecter la température et la pression du fluide frigorigène.
